# EUROPEAN PATENT APPLICATION

(11) **EP 4 477 545 A1**
(43) Date of publication of application: **18.12.2024**
(21) Application number: 23179736.6
(22) Date of filing: 16.06.2023
(51) Int. Cl.: B64D 11/04, A47J 31/00

(54) **AIRCRAFT GALLEY INSERT BEVERAGE APPARATUS**

(71) Applicant: B/E Aerospace (UK) Limited, Leighton Buzzard, Bedfordshire LU7 4TB (GB)
(72) Inventor: WALL, Daniel H., Baldock, SG7 5FE (GB); HARRIS, Adam Luke, Leighton Buzzard, LU7 4FS (GB); GRIFFITHS, Peter Ashley, Kensworth, LU6 2PP (GB)
(74) Representative: Dehns

(57) **Abstract**

There is provided herein an aircraft galley insert (2) including a beverage making apparatus (4) configured to dispense beverage singularly and independently, wherein the aircraft galley insert (2) is sized to fit within a standard envelope size (8), so as to be interchangeable with alternative galley inserts.

## Description

### TECHNICAL FIELD

The present disclosure relates to aircraft galley containers (or aircraft galley inserts), and in particular to beverage apparatus thereof.

### BACKGROUND

Aircraft galleys, which include aircraft galley containers, or aircraft galley inserts, are used in aircraft cabins having limited space to provide means to store, contain, and prepare beverages and food items for passengers on aircraft.

In particular, some aircraft galley inserts are used to make beverages, such as coffee, including filter coffee and espresso-based beverages, hot chocolate, tea, etc. Some known aircraft galley inserts include two beverage outlets so as to provide two beverages at the same time. However, these galley inserts have a size which requires a particular arrangement of galley inserts in the overall galley structure.

It is desirable to improve the use of the overall galley space with regard to varied functionality for the airline operator.

More particularly, it is desirable to provide an aircraft galley insert with a dual beverage making apparatus that increases design possibilities of the overall galley structure.

### SUMMARY

From one aspect, there is provided an aircraft galley insert including a beverage making apparatus configured to dispense beverage singularly and independently, wherein the aircraft galley insert is sized to fit within a standard envelope size, so as to be interchangeable with alternative galley inserts.

In some arrangements, the standard envelope size is ARINC 4 of ARINC 810-5 standard for galley insert equipment.

In some arrangements, the standard envelope size includes a width of 312 mm (123 in), a height of 282 mm (111 in), and a depth of 650 mm (256 in).

In some arrangements, the beverage making apparatus is a dual beverage making device having a singular plumbing inlet and two beverage outlets.

In some arrangements, at least one of the beverage outlets is a brewing head configured to dispense brewed beverage.

In some arrangements, the dual beverage making device includes an internal brewing apparatus.

In some arrangements, at least one of the beverage outlets is a faucet configured to dispense water having a temperature of more than 80 °C, and the dual beverage making device includes at least one water heating element configured to heat water to more than 80 °C.

In some arrangements, the beverage making apparatus includes a first beverage making device and a second beverage making device wherein the second beverage making device is independent from the first beverage making device, wherein the first beverage making device includes a first plumbing inlet and a first beverage outlet and the second beverage making device includes a second plumbing inlet and a second beverage outlet.

In some arrangements, at least one of the first beverage outlet and the second beverage outlet is a brewing head configured to dispense brewed beverage.

In some arrangements, at least one of the first beverage making device and the second beverage making device includes an internal brewing apparatus.

In some arrangements, at least one of the first beverage outlet and the second beverage outlet is a faucet configured to dispense water having a temperature of more than 80 °C, and the dual beverage making device includes at least one water heating element configured to heat water to more than 80 °C.

In some arrangements, the beverage making apparatus includes a front from which beverage is dispensed, wherein the front is set back from a forward plane of the standard envelope size.

There is also provided an aircraft galley including: an aircraft galley housing structure including a plurality of cavities each cavity configured to house an aircraft galley insert; and the aircraft galley insert of any of the above housed within one of the plurality of cavities, wherein each cavity of the plurality of cavities has the standard envelope size.

There is also provided an aircraft cabin having the aircraft galley of the above.

There is also provided an aircraft having the aircraft cabin of the above.

The features above may be combined in any combination and with further features or aspects as discussed below.

### BRIEF DESCRIPTION OF DRAWINGS

Various embodiments of this disclosure will now be described by way of example only, with reference to the accompanying drawings in which:
Figure 1A illustrates a schematic front view of an aircraft galley insert having a dual beverage making device.
Figure 1B illustrates a schematic side view of the aircraft galley insert shown in Figure 1A.
Figure 2A illustrates a schematic front view of an aircraft galley insert having a pair of beverage making devices.
Figure 2B illustrates a schematic side view of the aircraft galley insert shown in Figure 2A.
Figure 3 illustrates a schematic view of an exemplary aircraft galley housing structure.
Figure 4 illustrates a schematic view of a prior art aircraft galley housing structure.

### DETAILED DESCRIPTION OF DRAWINGS

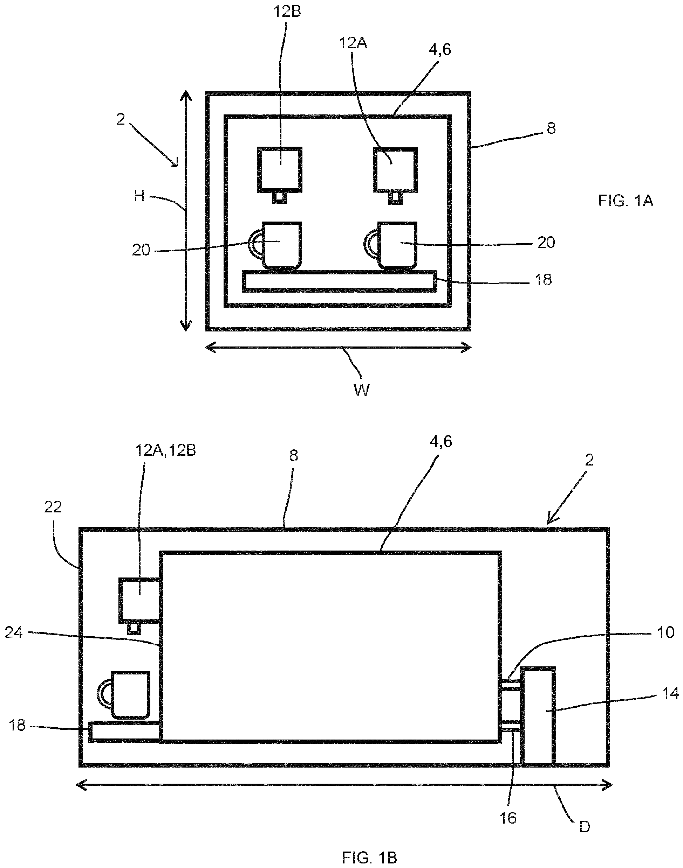

With reference to Figures 1A and 1B, there is described an aircraft galley insert 2.

The aircraft galley insert 2 has a beverage making apparatus 4, which is a dual beverage making device 6. The dual beverage making device 6 is configured as a singular device. It is formed as a single unit.

The dual beverage making device 6 is configured to dispense two beverages singularly and independently. The beverages may be dispensed at the same time, or at different times, and may be the same types of beverage or different types of beverage.

Typically the beverages are hot, for example, coffee, hot chocolate, tea, or hot water to be used in making coffee, hot chocolate or tea, for example by use of a tea bag or powder-based instant beverages. However, cold or ambient temperature beverages are also envisaged.

The aircraft galley insert 2 is sized to fit within a standard envelope size 8. The standard envelope size 8 has a width W, a height H, and a depth D. The standard envelope size 8 may correspond to the ARINC 4 size of the ARINC 810-5 standard for galley insert equipment. That is, the internal width W is 312.4 mm (123 in), the internal height H is 281.94 mm (111 in) and the internal depth D is 650 mm (256 in). Given to the same precision, these dimensions are an internal width W of 312 mm (123 in), an internal height H of 282 mm (111 in) and an internal depth D of 650 mm (256 in). Other sizes of standard envelope sizes, which provide interchangeability with other galley inserts in the same structure, are also envisaged.

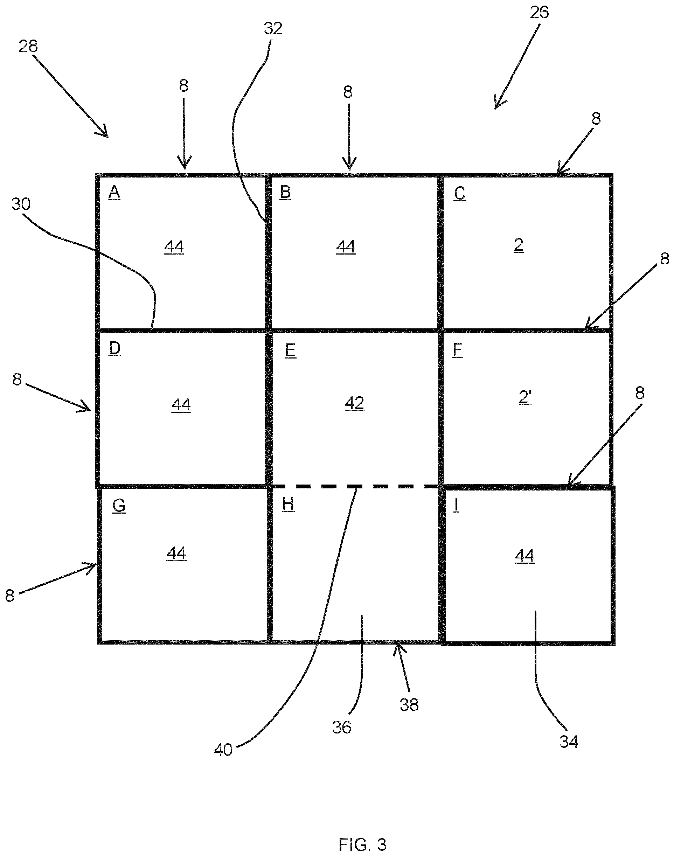

It will be appreciated, that for the envelope, the height, width, and depth is the same as the internal height, internal width, and internal depth. The internal dimensions are for consideration with a structure, such as an aircraft galley housing structure providing cavities having the standard envelope size as their interior dimensions. (Such an aircraft galley housing structure is considered further below with reference to Figure 3.)

The dual beverage making device 6 may include a singular plumbing inlet 10 and two beverage outlets 12A, 12B. The plumbing inlet 10 provides a connection for water to be provided to the dual beverage making device 6 from the aircraft cabin. The exemplary singular plumbing inlet 10 is connected to an interface bracket 14, which may be a standard interface bracket 14 as described in the ARINC 4 standard.

The interface bracket 14 also may include an electronic power connection 16, which may separately, or as a part thereof, include data connections for information collection and/or for control of the beverage making apparatus 4 remotely from the aircraft galley insert 2. Alternatively, the beverage making apparatus 4 may be controlled proximally thereto, for example, by user inputs on a panel (not shown), either with buttons, or a touch-screen interface, as part of the aircraft galley insert 2.

The beverage outlets 12A, 12B may take any appropriate form. They may be the same or different from one another.

One exemplary beverage outlet 12A, 12B is a brewing head configured to dispense brewed beverage. For example, coffee, which may include filter coffee, espresso or espresso-based coffee, or any other type of coffee, may be dispensed from the brewing head, having been brewed either by the brewing head, or by internal brewing apparatus within the dual beverage making device 6.

The internal brewing apparatus may include a compartment configured to hold coffee powder or grounds and to receive pressurised, or standard pressure, hot water or steam, to extract the coffee from the powder or grounds to the beverage. The internal brewing device could be configured to brew coffee from coffee pods. The internal brewing apparatus may include a filter device, such as a metal mesh, or a receptacle for filter paper.

The exemplary beverage outlet 12A, 12B may also be configured to dispense hot drinks other than coffee-based drinks, such as hot chocolate.

The beverage outlet 12A, 12B may include features to provide frothed drinks, such as cappuccino or similar drinks. Those features may include a secondary nozzle for providing steam to thereby froth milk.

The beverage outlet 12A, 12B may alternatively be configured to dispense hot water. The hot water is between about 65 °C and 100 °C, or more particularly between 80 °C and 90 °C, for example about 85 °C. The beverage outlet 12A, 12B for dispensing water may be a faucet. When the beverage outlet 12A, 12B is a faucet for dispensing hot water, the dual beverage making device 6 includes at least one water heating element configured to heat the water to between about 65 °C and 100 °C, or more particularly between 80 °C and 90 °C, for example about 85 °C. Hot water is required to prepare the hot drinks; however, avoiding boiling water at 100 °C can be beneficial to reduce the risk of scalding to users.

The dual beverage making device 6 may include a reservoir for milk and/or may include storage for drinks ingredients, for example, but not limited to powdered milk, coffee powder, grounds or beans, chocolate powder. When configured to hold coffee beans, the dual beverage making device 6 will also include a grinder for grinding the coffee ready to brew espresso-based, or filter-based coffees.

The hot water may be used for making tea by use of a tea bag, or for 'instant' powder-based drinks.

The illustrated beverage making apparatus 4 includes a tray 18 providing a flat surface protruding from the dual beverage making device 6. The tray 18 is configured to supports drinks receptacles 20 under the beverage outlets 12A, 12B. The drinks receptacles 20 may be mugs as illustrated, or may be cups, jugs, or any other suitable container. In some arrangements, the drinks receptacles 20 could include a pour-over style filter for brewing coffee over a mug. The tray 18 could be fixed, or could be stowable, for example by sliding into a recess within the beverage making apparatus 4, or by being hinged to the front of the beverage making apparatus 4 and thus able to fold up vertically. It is also envisaged that a pair of trays could be used, each smaller than the tray 18 illustrated, and located underneath each of the beverage outlets 12A, 12B.

The standard envelope 8 may include a forward plane 22. The front 24 of the illustrated beverage making apparatus 4 is set-back from the forward plane 22. In this way, the beverage outlets 12A, 12B and the tray 18, as well as any drinks receptacles 20 do not extend forward of the forward plane. This ensures that the space in the galley of the aircraft cabin is kept clear, to provide optimal space for aircraft cabin crew to operate. There is also a reduced risk of spillage of beverage from being knocked by cabin crew.

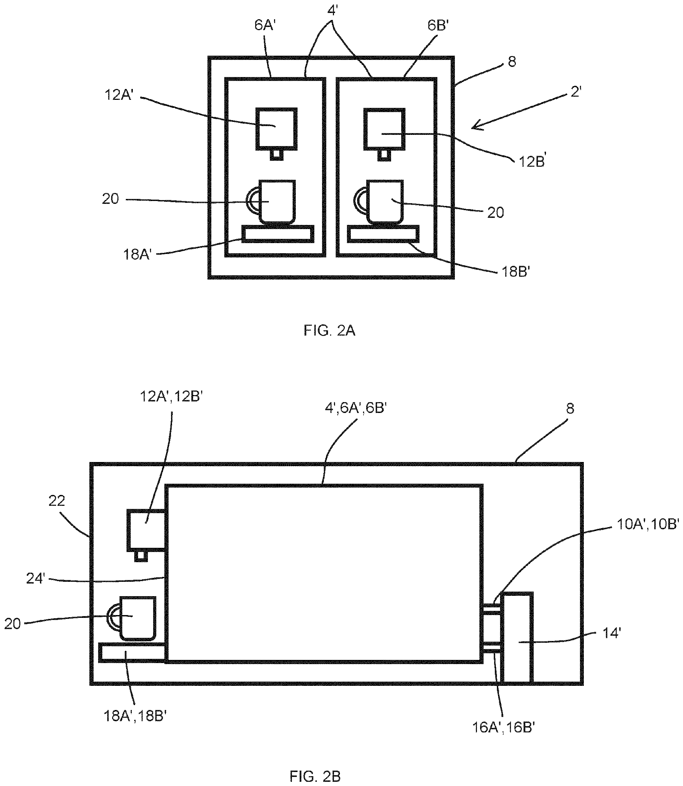

With reference to Figures 2A and 2B, another exemplary aircraft galley insert 2' is described.

The aircraft galley insert 2' is similar to the aircraft galley insert 2 of Figures 1A and 1B and unless described as different, share the same features. For example, the standard envelope 8' of Figures 2A and 2B is the same as the standard envelope 8 of Figures 1A and 1B, and the first and second beverage outlets 12A', 12B' of Figures 2A and 2B may take any appropriate form in any combination, as described above for the beverage outlets 12A, 12B of Figures 1A and 1B. The main difference is that, instead of a dual beverage making device 6 forming the beverage making apparatus 4 of Figures 1A and 1B, a first beverage making device 6A' and a second beverage making device 6B' form the beverage making apparatus 4' of Figures 2A and 2B. The first beverage making device 6A' and the second beverage making device 6B' are independent from one another, having distinct plumbing and controls.

Accordingly, the aircraft galley insert 2' of Figures 2A and 2B includes a first plumbing inlet 10A' configured to provide water to the first beverage making device 6A' and a second plumbing inlet 10B' configured to provide water to the second beverage making device 6B'.

Each of the first plumbing inlet 10A' and the second plumbing inlet 10B' are connected to an interface bracket 14', which may correspond to a standard interface bracket 14' as described in the ARINC 4 standard.

The interface bracket 14' of this arrangement also includes a first electronic power connection 16A', which may separately, or as a part thereof, include data connections for information collection and/or for control of the first beverage making device 6A' remotely from the aircraft galley insert 2'. Alternatively, the first beverage making device 6A' may be controlled proximally thereto, for example, by user inputs on a panel (not shown), either with buttons, or a touch-screen interface, as part of the aircraft galley insert 2'.

The interface bracket 14' of this arrangement also includes a second electronic power connection 16B', which may separately, or as a part thereof, include data connections for information collection and/or for control of the second beverage making device 6B' remotely from the aircraft galley insert 2'. Alternatively, the second beverage making device 6B' may be controlled proximally thereto, for example, by user inputs on a panel (not shown), either with buttons, or a touch-screen interface, as part of the aircraft galley insert 2'.

As mentioned above, the first and second beverage outlets 12A', 12B' of Figures 2A and 2B are similar to the beverage outlets 12A, 12B of the arrangement of Figures 1A and 1B. However, as the first and second beverage outlets 12A', 12B' are associated with the separate, first and second beverage making devices 6A', 6B', the necessary internal brewing apparatus, or water heating apparatus, e.g., boiler, are also separate, contained separately within each of the first and second beverage making devices 6A', 6B' respectively.

Rather than a single tray 18 as illustrated in Figures 1A and 1B, the arrangement of Figures 2A and 2B includes a first tray 18A' associated with the first beverage outlet 12A' and a second tray 18B' associated with the second beverage outlet 12B'. The trays 18A', 18B' are sized accordingly to fit with the first and second beverage outlets 12A', 12B' respectively and are each configured to support a drinks receptacle 20. Similar to the tray 18 of the dual beverage making device 6 of Figures 1A and 1B, the first and second trays 18A, 18B may be fixed or stowable, either slidably or hinged.

With reference to Figure 3, an exemplary aircraft galley 26 is illustrated. The illustrated aircraft galley 26 includes an area sized to fit a 3 by 3 grid of standard envelopes 8. By way of reference only, these form positions A, B, C, D, E, F, G, H and I; or, using other terminology: top-left, top-centre, top-right, middle-left, middle-centre, middle-right, bottomleft, bottom-centre and bottom-right.

As will be appreciated, the use of a 3 by 3 grid of standard envelope sizes is exemplary only. Alternative arrangements are envisaged and are dependent on the configuration within the aircraft galley. Some non-limiting examples may be anything from a single envelope space such as provided in a small, corner space of an aircraft galley, to a 3 high by 8 wide grids covering the majority of a wall of an aircraft galley. More of fewer columns could also be used. Single-height or double-height arrays may also be used. The arrangements need not be neat rectangular arrangements but could instead be L-shaped, or Z-shaped for example, and/or may have columns of standard envelope sizes offset from adjacent columns.

The aircraft galley 26 is formed with tessellating standard envelope shapes. The aircraft galley 26 is formed by an aircraft galley housing structure 28, which includes a plurality of horizontal shelves 30 and vertical dividers 32. The aircraft galley housing structure 28 forms a plurality of cavities 34, 36.

In the illustrated aircraft galley 26 seven cavities 34 of a standard envelope size 8 are arranged in a U-shape around positions E and H, i.e., around the middle-centre and bottom-centre positions, which include a larger cavity 36.

The larger cavity 36, which is at positions E and H (middle-centre and bottom-centre) is sized with a secondary standard envelope 38 size, which is exactly twice as high as the standard envelope 8. In this manner, the secondary standard envelope 38 can be provided in place of two of the standard envelopes 8, as shown at positions E and H, by removing a shelf 40, shown in phantom (dotted line) between positions E and H. The secondary standard envelope 38 can still therefore fit neatly, in a tessellating-style manner, with the standard envelopes 8.

The secondary standard envelope 38 may include an oven 42, for example. Details of the oven 42 are not illustrated.

Each of the cavities 34 includes an aircraft galley insert 2, 2', 44, which may either be one of the aircraft galley inserts 2, 2' as described above for making beverages, or may be an alternative aircraft galley insert 44, such as a cupboard, a fridge, a lockable container, or any other suitable device.

An aircraft galley 26 arranged in this way enables a variety of configurations to be used, with interchanging different inserts with one another, either permanently, or temporarily. This also enables different design configurations to be used. The exact choice of configuration can be tailored to specific needs and uses, for example from particular flights. For example, for an aircraft used in a flight spanning a meal time, an additional oven 42 may be included in place of a pair of cupboards. Alternatively, for a flight not spanning a meal time, when beverages and snacks will be served, the oven 42 could be replaced with an additional beverage making insert and an additional cupboard. It will be appreciated that these are exemplary options discussed to demonstrate the versatility of an aircraft galley 26 having inserts of the same standard envelope size and/or tessellating multiples thereof.

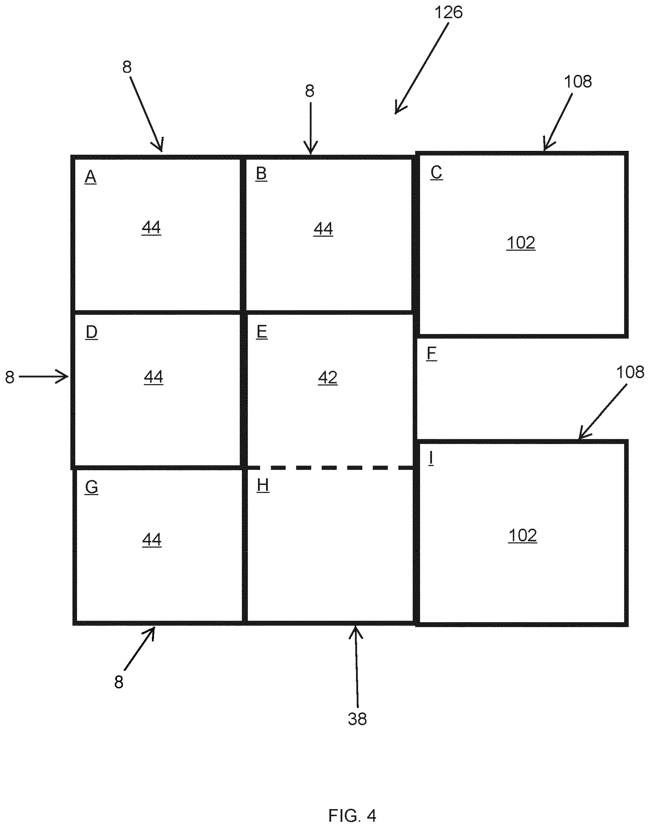

Figure 4 illustrates a contrasting aircraft galley 126, having aircraft galley inserts 102 for preparing beverages having differing envelope 108 that does not correspond to the standard envelope 8. For example, the differing envelope 108 of the aircraft galley inserts 102 may correspond to the ARINC 1 size of the ARINC 810-5 standard for galley insert equipment. With these aircraft galley inserts 102 having the differing size envelopes 108, the inserts 108 cannot be interchanged with the inserts 44 in the same way as the configuration of Figure 4, and thus provide significantly fewer design possibilities or interchangeability. Moreover, in the specific arrangement illustrated, space F cannot accommodate any of the galley inserts 2, 2', 42, 44, 102 presented.

While an aircraft galley 26 has been illustrated as a single wall of aircraft galley inserts 2, 2', 42, 44 in a galley housing structure 28, it is appreciated that an aircraft galley may include a pair of opposing walls of galley inserts in a pair of opposing galley housing structures. Moreover, additional walls or differing size walls could be provided as part of the galley.

An aircraft cabin (not shown) may include, among other things, one or more of the aircraft galleys 26 provided herein. For example, a galley 26 could be provided at both the front and aft of an aircraft cabin, and optionally also toward the middle of an aircraft cabin. The interchangeability of the aircraft galley inserts 2, 2', 42, 44 may be particularly useful when an aircraft cabin has multiple galleys 26 as each location in the cabin can be tailored to have a different configuration of inserts.

An aircraft (not shown) includes, among other things, the aircraft cabin having one or more of the aircraft galleys 26 provided herein. Some controls for the beverage making apparatus, for example an emergency cut-off control to prevent preparation of hot beverages or water, could be controlled from a cockpit of the aircraft. This may be useful in the event of expected turbulence, for example.

## Claims

1. An aircraft galley insert (2; 2') comprising:
a beverage making apparatus (4; 4') configured to dispense beverage singularly and independently,
wherein the aircraft galley insert (2; 2') is sized to fit within a standard envelope size (8), so as to be interchangeable with alternative galley inserts (44).

2. The aircraft galley insert (2; 2') of claim 1, wherein the standard envelope size (8) is ARINC 4 of ARINC 810-5 standard for galley insert equipment.

3. The aircraft galley insert (2; 2') of claim 1, wherein the standard envelope size (8) includes a width (W) of 312 mm, a height (H) of 282 mm, and a depth (D) of 650 mm.

4. The aircraft galley insert (2) of any preceding claim, wherein the beverage making apparatus (4) is a dual beverage making device (6) having a singular plumbing inlet (10) and two beverage outlets (12A, 12B).

5. The aircraft galley insert (2) of claim 4, wherein at least one of the beverage outlets (12A, 12B) is a brewing head configured to dispense brewed beverage.

6. The aircraft galley insert (2) of claim 5, wherein the dual beverage making device (6) includes an internal brewing apparatus.

7. The aircraft galley insert (2) of any of claims 4 to 6, wherein at least one of the beverage outlets (12A, 12B) is a faucet configured to dispense water having a temperature of more than 80 °C, and the dual beverage making device (6) includes at least one water heating element configured to heat water to more than 80 °C.

8. The aircraft galley insert (2') of any of claims 1 to 3, wherein the beverage making apparatus (4') includes a first beverage making device (6A') and a second beverage making device (6B') wherein the second beverage making device (6B') is independent from the first beverage making device (6A'), wherein the first beverage making device (6a') includes a first plumbing inlet (10A') and a first beverage outlet (12A') and the second beverage making device (6B') includes a second plumbing inlet (10B') and a second beverage outlet (12B').

9. The aircraft galley insert (2') of claim 8, wherein at least one of the first beverage outlet (12A') and the second beverage outlet (12B') is a brewing head configured to dispense brewed beverage.

10. The aircraft galley insert (2') of claim 9, wherein said at least one of the first beverage making device (6A') and the second beverage making device (6B') includes an internal brewing apparatus.

11. The aircraft galley insert (2') of any of claims 8 to 10, wherein at least one of the first beverage outlet (12A') and the second beverage outlet (12B') is a faucet configured to dispense water having a temperature of more than 80 °C, and the beverage making apparatus (4') includes at least one water heating element configured to heat water to more than 80 °C.

12. The aircraft galley insert (2; 2') of any preceding claim, wherein the beverage making apparatus (4; 4') includes a front (24; 24') from which beverage is dispensed, wherein the front (24; 24') is set back from a forward plane (22) of the standard envelope size (8).

13. An aircraft galley (26) comprising:
an aircraft galley housing structure (28) including a plurality of cavities (34) each cavity (34) configured to house an aircraft galley insert (2; 2');
the aircraft galley insert (2; 2') of any preceding claim housed within one of the plurality of cavities (34),
wherein each cavity (34) of the plurality of cavities (34) has the standard envelope size.

14. An aircraft cabin having the aircraft galley (26) of claim 13.

15. An aircraft having the aircraft cabin of claim 14.
